Europäisches Patentamt

European Patent Office

Office européen des brevets

(11) Publication number: **0 243 364 B1**

(12) **EUROPEAN PATENT SPECIFICATION**

(45) Date of publication of patent specification: **11.10.89**

(51) Int. Cl.⁴: **A 21 B 7/00, A 21 C 1/00**

(21) Application number: **86900351.7**

(22) Date of filing: **23.12.85**

(86) International application number:
**PCT/SE85/00548**

(87) International publication number:
**WO 86/03931 17.07.86 Gazette 86/17**

(54) **AN APPARATUS FOR AUTOMATICALLY MAKING FOOD PRODUCTS SUCH AS BREAD, CAKES AND THE LIKE.**

(30) Priority: **27.12.84 KR 848396**

(43) Date of publication of application:
**04.11.87 Bulletin 87/45**

(45) Publication of the grant of the patent:
**11.10.89 Bulletin 89/41**

(84) Designated Contracting States:
**AT BE CH DE FR GB IT LI LU NL SE**

(56) References cited:
**EP-A-0 113 327**
**GB-A-1 402 538**
**US-A-2 899 318**
**US-A-3 194 185**
**US-A-3 873 735**
**US-A-4 234 605**
**US-A-4 304 177**

(73) Proprietor: **Heden-Team Aktiengesellschaft**
**P.O. Box 777**
**FL-9497 Triesenberg (LI)**

(72) Inventor: **Hedenberg, Gunnar**
**Ejderstigen 15**
**S-450 33 Grundsund (SE)**

(74) Representative: **Harland, Linda Jane et al**
**c/o Reddie & Grose 16 Theobalds Road**
**London WC1X 8PL (GB)**

Courier Press, Leamington Spa, England.

## Description

### Technical field

An apparatus for automatically making food products in piece form from dough-like substances comprising a housing containing holding means adapted to be affixed to both ends of a flexible sealable bag containing the ingredients for the dough-like substance, and a dough preparation station having an upper and a lower slit forming slit openings, kneading means for mechanically working the ingredients in said bag, said kneading means including the holding means and slit openings, and means for creating relative oscillating movement between the bag and the slit openings so that the ingredients are kneaded into a dough-like substance; and a heat treating station in said housing whereby the kneaded dough-like substance is treated, said slit openings each being defined by two guiding means such as sliding surfaces or rollers.

### Background of the invention

Baking e.g. bread for household purposes is a relatively complicated, time consuming, work intensive and messy business. By the fact that the quality of the bread to a certain extent depends on the fermentation time and that the fermentation procedure is performed under correct conditions, which takes a relatively long time, there are few people that have the privilege of eating fresh home-made bread for breakfast.

In the EP—A—0 113 327 there is disclosed a baking apparatus of the above mentioned kind which can produce bread automatically without soiling various vessels and utensils, as the mixing and kneading operations of the dough takes place in a flexible sealable bag containing the necessary ingredients for the dough.

### Summary and advantages of the invention

The object of the invention is to provide a baking apparatus of the above mentioned kind which allows ventilation of the bag in order to allow gas to escape formed e.g. during the fermentation of the dough.

This is achieved by the fact that at least one of the guiding means of at least the upper slit is moveable relative to the other guiding means in that pair so as to allow gas to escape from the bag at the desired time.

### Brief description of the drawings

Figure 1 shows a section through a first embodiment of the baking apparatus.

Figure 2 is a section according to the line II—II in Fig. 1.

Figure 3 is a section according to the line III—III in Fig. 2.

Figure 4 shows a section through a second embodiment of the baking apparatus.

Figure 5 shows a part of the baking oven of Fig. 4.

Figure 6 is a perspective view of a bag used in the baking apparatus according to the invention.

Figure 7 shows a section through a third embodiment in which the baking oven is movable with respect to the fixed vessel.

### Description of preferred embodiments

The baking apparatus is basically of the type described in EP—A—0 113 327 and consists of holding means 11, a flexible bag 12 attachable thereto and a common dough preparation and heat treatment station 13, 14. The whole arrangement is located inside a thermally insulated casing 15.

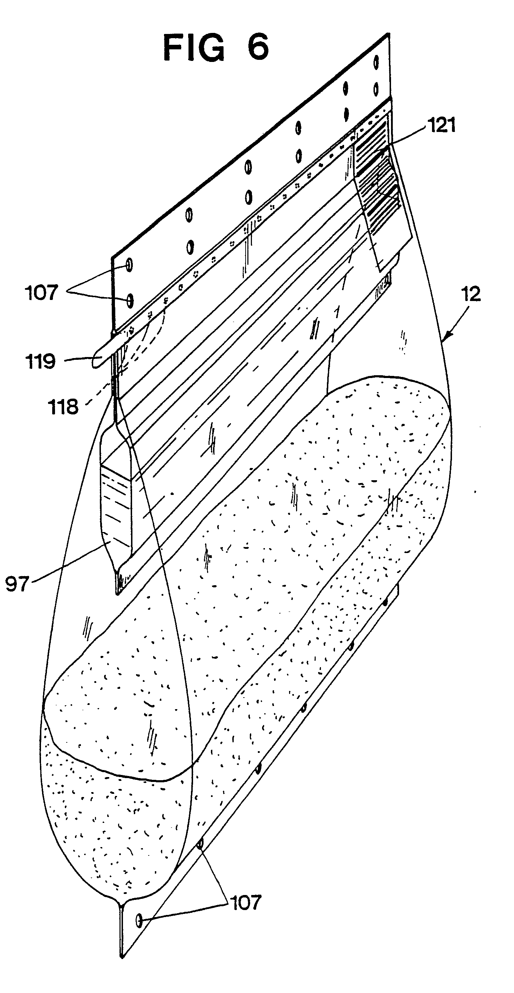

The flexible bag 12, an embodiment of which is shown in Fig. 6 is used as a transportation package for the dry ingredients from the producer to the user and as a vessel during the preparation of the dough and possibly also during the baking. The bag 12 must therefore withstand rough mechanical treatment and preferably also contains a second bag or a separate compartment, in which is contained the liquid required for preparation of the dough. The compartments containing the dry ingredients and the baking liquid respectively are separated by e.g. a weld joint which is burst when the kneading operation starts. Alternatively, the liquid for the dough can also be added through a nozzle, especially if the liquid is only water. The bag 12 is attached to of least two holding means 11 which are so formed that the end pieces of the opening 18 of the bag can be squeezed between gripping jaws 17.

The programmer interrupts the dough preparation after an empirically pre-determined dough preparation time so that no overworking of the dough occurs which could lead to dry bread. Already during the preparation of the dough the heater 23 in the heat treatment station 14 can be started in order to obtain an appropriate fermentation time. The dough can be made to ferment several times possibly interrupted by new kneading operations according to the inserted program. When the fermentation of the dough is finished the baking takes place directly in the combined dough preparation—and baking station 13, 14.

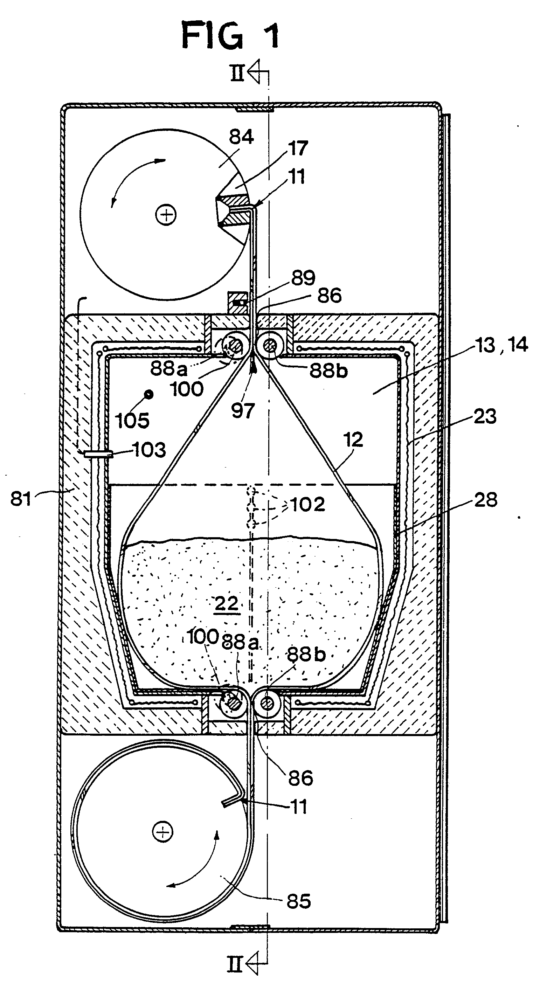

The embodiment shown in Fig. 1 comprises a common dough preparation and heat treatment station 13, 14 consisting of two housing halves 81, 82 of which the first one 81 is stationary while the second one 82 is displaceable or rotatable with respect to the stationary half. In the embodiment shown the movable housing half 82 is rotatable about a vertical hinge so that the dough preparation and heat treatment stations 13, 14 and the holding means can be reached.

The mixing of the ingredients and the dough preparation is accomplished by attaching the upper end portion of the bag 12 to a holding means 11 at an upper rotatable cylinder 84, while the lower end of the bag in a corresponding way is attached to another holding means 11 at a lower rotatable cylinder 85. The cylinders 84 and 85 are driven by a reversible motor (not shown) about one revolution, after which the motor is reversed. In this way the bag 12 is given an oscillating up and downwards movement. The bag must pass through an upper and a lower slit-shaped opening 86 between the housing halves 81 and 82, which only permits a substantially empty bag to pass. This means that the content of the bag—the dough—alternatively will be kneaded against the upper and lower part of the inner walls of the baking oven 14, where the slit 86 is located. In order to reduce the friction between the bag and the edge between the slit and the inner wall, these parts are provided with or rolls 88a and b.

Practical test have proved that a very effective mixing and kneading of the dough is achieved by this very simple device, even if the dough is relatively stiff.

The bags with the ingredients are preferably delivered hermetically sealed and if the baking recipe prescribes that the preparation of the dough and/or the baking should be made under atmospheric conditions it is appropriate to arrange a perforation and/or cutting device 89, which can perforate the bag in a certain position, so that the interior of the bag will communicate with the atmosphere.

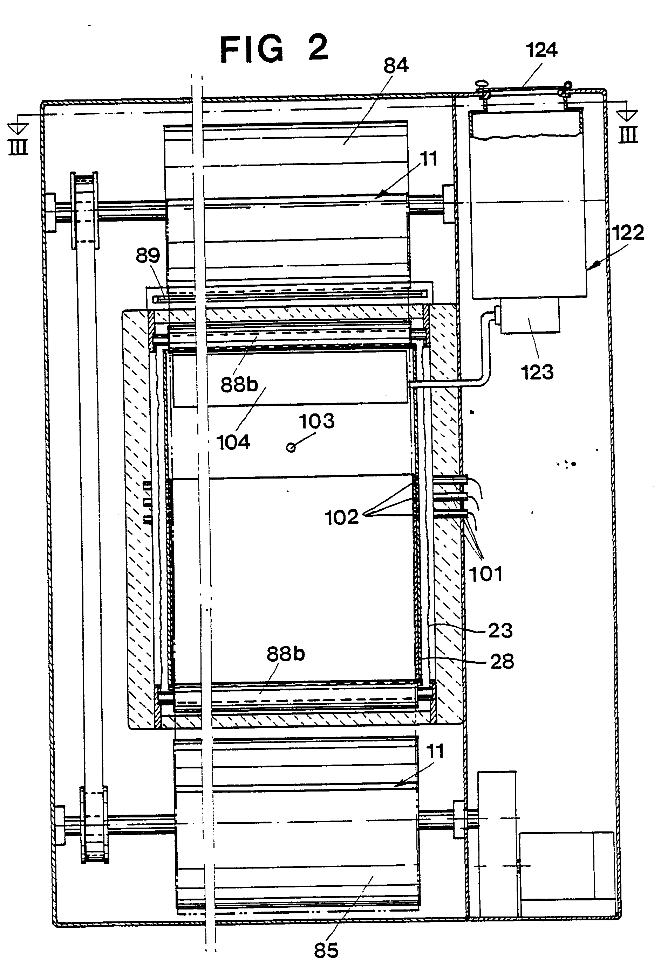

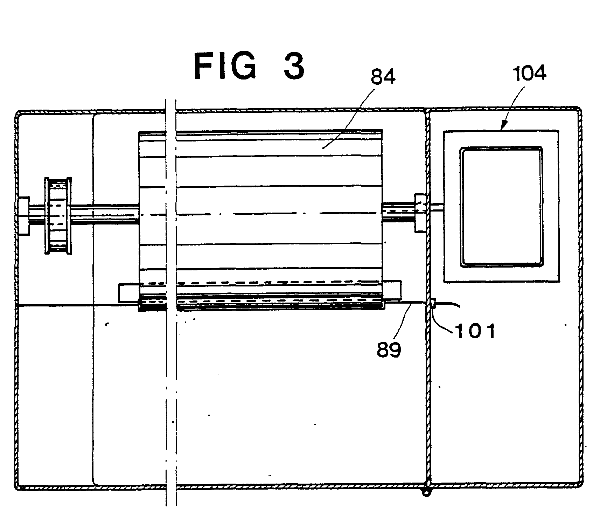

In the embodiment shown in Figures 1—3 a baking tin 28 is arranged in the common dough preparation and heat treatment station 13, 14. The baking tin 28 also consist of two parts, e.g. hingedly connected to each other along the same parting line as the housing halves 81, 82. The baking tin 28 can be removed from the housing 81, 82 for washing purposes.

It can sometimes be necessary to ventilate the bag 12 during the mixing- and kneading operation due to formation of gas in the dough. One of the rolls 88a in each pair of rolls 88 between which the bag 12 passes is therefore displaceable in an inclined oblong groove 100, so that when the bag 12 is unrolled from the respective rotatable cylinders 84 or 85 the respective pair of rolls 88 is permitted to move apart a few millimeters, so that gas may escape between the rolls 88a and b and out of the bag through e.g. perforations 108 (Fig. 6). The opposite pair of rolls 88 are at the same time pressed together against the bag 12 and seal the opening thereof. If any dough would pass between the rolls 88a and b it will be allowed to pass back when the bag 12 is unrolled from the cylinders 84 or 85 and the rolls 88a and b are moved apart.

A similar function can be provided in other ways, e.g. by making one of the rolls 88 in each pair of rolls 88 spring-loaded and actuated by an electromagnet.

A cutting device 89 in the form of a heating filament is arranged to open the bag 12 after the mixing- and kneading operation is finished. The dough is then pressed out of the bag 12 and is spread in the baking tin 28 when the bag is reeled on the rotatable roll 85 and removed from the dough preparation and heat treatment station 13, 14 before the fermentation takes place.

A number of sensors, e.g. fotocells 101, are arranged to detect the rise level of the dough in order to determine when the fermentation is sufficient. Apertures 102 are provided in the walls of the dough preparation—and heat treatment station 13, 14 and in the baking tin 28 just opposite the fotocells 101.

A temperature sensor 103 sensing the temperature in the dough preparation and heat treatment station 13, 14 is also provided.

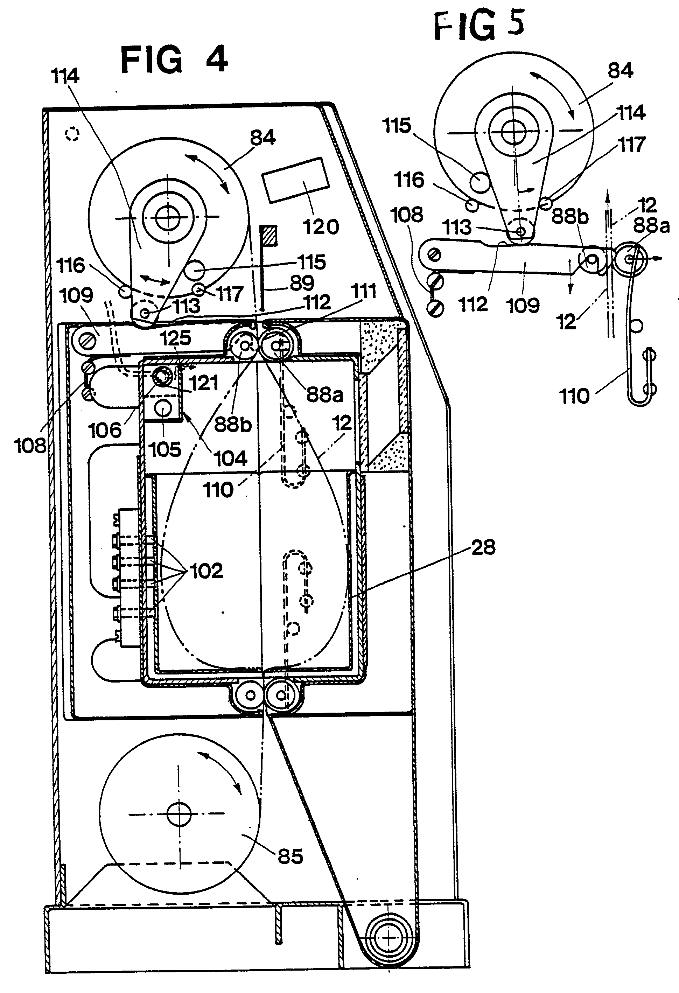

A steam generator 104 is arranged in the dough preparation and heat treatment station 13, 14 and is arranged to introduce steam into said station during and/or after the baking operation in order to produce a crust and/or glossy surface on the bread. The steam generator 104 (see also Fig. 4) comprises a heating rod 105 and a tube 106 which is perforated 121 and communicates with a water container 122 through a valve 123 controlling the supply of water to the steam generator 104. Water can be filled through an opening covered by a lid 124. The steam generated in the steam generator 104 can escape through a slit 125.

In the embodiment shown in Figures 4 and 5 the ventilation of the bag 12 is provided by means of a spring-loaded 108 lever arm 109 actuating the spring-loaded 110 roll 88a. The other roll 88b is fixed. The lever arm 109 has a surface 111 bearing against the roll 88a and is on its side facing the roll 88 provided with a small recess 112 with a slanting approach along which a roll 113 attached at an actuator in the form of a presser cam 114 can be moved. The presser cam 114 is rotatably attached to the hub of the cylinder 84 and is actuated by a driving pin 115 attached to the cylinder 84. Two stops 116 and 117 limits the movement of the presser cam 114.

In the position shown in Fig. 4 the roll 113 of the presser cam 114 is located in the recess 112 of the lever arm 109, which in this position does not exert any pressure on the roll 88a, which therefore is pressed against the fixed roll 88b by the spring 110. When the cylinder 84 is rotated in counter clockwise direction the bag 12 is moved upwards between the rolls 88a and b, which are pressed against each other, and when the driving pin 115 reaches the presser cam 114 this will be moved together with the roll 84 until it reaches the stop 17. The roll 113 is then moved from the recess 112 and along the approach thereof, at which the lever arm 109 will be pressed downwards and exert a pressure on the roll 88a, which will be moved apart from the fixed roll 88b a short distance (Fig. 5).

The motor is then reversed and the cylinder 84 is rotated in clockwise direction, while the lever arm 109 will remain in the position shown in Fig. 5 until the driving pin 115 reaches the presser cam 114 and forces it to move to the position shown in Fig. 4 at which the lever arm 109 releases the roll 88a. Thus during the time the bag 12 is unrolled from the cylinder 84 the rolls 88a and b are moved apart allowing ventilation of the bag and/or the passage of possible dough rests in the bag that might have come along with the bag.

The gas may escape out of the bag 12 through perforations 118 (Fig. 6), which before use of the bag are covered by an adhesive tape 119 or the like. Alternatively the upper edge which seals the bag 12 is torn away before the bag is attached to the cylinder 84 and 85 between gripping jaws 17 (Fig. 1). One or both gripping jaws 17 can be provided with a cogging or similar irregularities, so that gas may escape therebetween.

A bar code scanner 120 reading a bar code 121 applied or printed on the upper portion of the bag 12 (see Fig. 6) is arranged just opposite the upper cylinder 84. The bar code 120 contains the baking program, such as mixing and kneading time, speed of the cylinders, fermentation time and temperature, baking time and temperature, steam generation etc. The bar code scanner 120 initiates the programmer which takes care of the whole production process. It is important to note that the bar code 121 is read before the bag 12 is wound up on the cylinder 24, which can stretch the bag and destroy the bar code symbols.

The cutting device 89 in the embodiment of Fig. 4 consists of a bimetallic member which when heated will bend and be brought into contact with the bag and cut this off. The bag 12 will then be wound up on the roll 85, while the dough remains in the baking tin 28.

Alternatively the attachment of the bag 12 at the upper cylinder 84 is released after finished kneading operation and the bag is wound up in the lower cylinder 85 at the same time as the dough is pressed of the upper open end of the bag. The gripping jaws 17 can e.g. be actuated by an electromagnet. In this case the cutting device 89 can be eliminated.

In order to prevent any dough rests to penetrate between the lower pair of rolls 88 during the fermentation and baking it can be appropriate not to wound the entire emptied bag 12 on the cylinder 84, but to leave the free end of the bag between the rolls 88 as a sealing.

In Figure 6 is shown a perspective view of a bag 12 contining the dry ingredients for the dough and an inner bag 97 with the baking liquid. The sealed upper said lower side edges of the bag 23 may be provided with perforations 107. The bag 12 may at its upper portion be provided with a bar code 121 as described above. The liquid may instead be contained in a separate compartment in the lower part of the bag, separated from the dry ingredients by a preelable seal which is burst when the bag passes between the rolls 88.

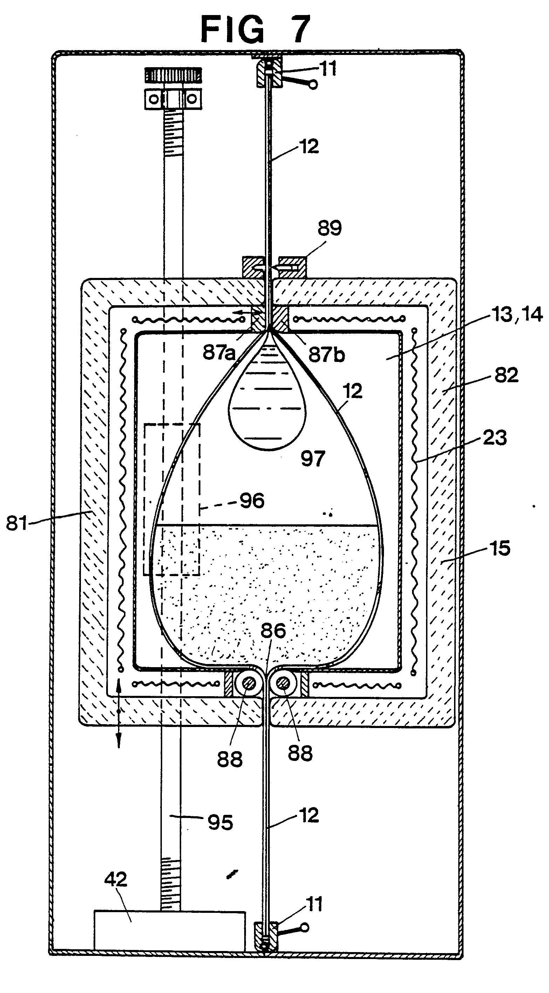

Another alternative embodiment of the baking apparatus is shown in Fig. 7, where the bag is stationary, i.e. it is at its upper and lower ends attached to appropriate holding means 11, while the combined dough preparation and heat treatment station 13, 14 in its two-piece design is movable in the longitudinal direction of the bag 12. This displaceability of the baking oven is provided by means of two spindles 95 arranged on opposite sides of the baking oven and rotatable by means of a motor 42, the spindles cooperating with nuts 96 fixedly attached to the outer casing of the baking oven. With the up-and downwards movement of the baking oven a bag 97 with the baking liquid will in the same way as in the embodiment according to Figures 1—5 and in cooperation with the slide members 87a and b in the slits 86 burst the bag 97 so that its contents, i.e. the liquid can mix with the dry ingredients in the plastic bag 12. One of the slide members 87a is displaceable a short distance away from the other slide member 87b, so that gas may escape between the slide members.

The invention is not limited to the embodiments described and shown but a plurality of modifications and combinations of details from the different embodiments are possible within the scope of the claims. It would e.g. be possible to have the heat treatment station separated from the dough preparation station, at which the prepared dough is pressed out of the bag into a baking tin placed in the heat treatment station. The heat treatment station may consist of a baking oven which is displaceable from a position in which it can receive the dough from the bag to baking position or alternatively the baking tin is displaceable with respect to the heat treatment station.

The baking apparatus may further be provided with a fan which leads air into a hollow bottom plate of the apparatus for cooling the electronic components and ventilating the baking oven after the baking.

## Claims

1. An apparatus for automatically making food products in piece form from dough-like substances comprising a housing containing holding means (11) adapted to be affixed to both ends of a flexible sealable bag (12) containing the ingredients for the dough-like substance, and a dough preparation station (13) having an upper and a lower slit forming slit openings (86); kneading means for mechanically working the ingredients in said bag, said kneading means including the holding means (11) and slit openings (86), and means for creating relative oscillating movement between the bag and the slit openings so that the ingredients are kneaded into a dough-like substance; and a heat treating station (14) in said housing whereby the kneaded dough-like substance is treated, said slit openings (86) each being defined by two guiding means such as sliding surfaces (87) or rollers (88), characterized in, that at least one of the guiding means (87, 88) of at least the upper slit is moveable relative to the other guiding means in that pair so as to allow gas to escape from the bag at the desired time.

2. An apparatus as claimed in claim 1, characterized in that one of said guiding means (87, 88) is by a spring (110) held against the other fixed guiding means and that actuating means (109, 114) are arranged for making the moveable spring-loaded guiding means (87, 88) to cause said guiding means to move apart from the other guiding means when the bag (12) passes therebetween towards the interior of the dough preparation station (13).

3. An apparatus as claimed in claim 1 or 2 and in which said holding means are cylinders (84; 85), each with attachment means (17) for affixing said bag (12) thereto, said upper and lower cylinders (84, 85) being rotatable in unison and the rotation being reversed in alternating fashion so that said bag (12) is oscillated up and down through said pair of guiding means (88), characterized in that said actuating means (109, 114) are associated with the respective cylinder (84) in such a way that in or near one reversing position of the cylinder (84) the actuating means (109, 114) are arranged to cause the movable guiding means (88a) to move apart from the fixed guiding means (88b) and in or near the other reversing position of the cylinder (84) they are arranged to release the moveable guiding means (88a).

4. An apparatus claimed in claim 3, characterized in that said actuating means comprises an actuator (114) arranged on the hub of the cylinder (84) and which by a driving pin (115) or the like attached to the cylinder (84) is arranged to rotate between two end positions during the last part of the rotation of the cylinder (84) before this is reversed, said actuator (114) bearing against a spring-loaded lever arm (109), which bears against the moveable guiding means (88a), so that in one end position of the actuator (114) the lever arm (109) presses said guiding means (88b) apart from the fixed guiding means and in the other end position of the actuator (114) the lever arm (109) releases said moveable guiding means (88a).

5. An apparatus as claimed in claim 2, characterized in that said actuating means comprises an electromagnet.

6. An apparatus as claimed in any of the preceding claims, characterized in that sensor means (102) are positioned in a wall of said heat treatment station (14), which sensor means detect the rise level of said kneaded dough-like substance.

7. An apparatus as claimed in claim 6, characterized in that a plurality of said sensor means (102) are vertically arranged so as to sense the height of said kneaded dough-like substance.

8. An apparatus as claimed in any of the preceding claims, characterized in that temperature sensing means (103) are positioned in a wall of said heat treatment station (14) for detecting the temperature of said kneaded dough-like substance as it is treated.

9. An apparatus as claimed in any of the preceding claims, characterized in that a steam generator (104) is arranged for introducing steam into the heat treatment station (13) during treatment of said kneaded dough-like substance.

10. An apparatus as claimed in claim 9, characterized in that said steam generator (104) comprises a heating element (105) and means (106) arranged thereabove for distributing water over said heating element, said distributing means (106) communicating with a water container arranged outside of said heat treatment station (14).

11. The apparatus as claimed in any of the preceding claims, characterized in that a bar code scanner (120) is arranged outside said slit (86) near the holding means (11) for reading a bar code (121) arranged on the bag (12), said bar code scanner (120) being connected to program means for the operation of the apparatus.

**Patentansprüche**

1. Vorrichtung zur automatischen Herstellung von Nährmitteln in Stückform aus teigartigen Substanzen, umfassend ein Gehäuse, das Halteeinrichtungen (11) enthält, die an beiden Enden eines die Zutaten für die teigartige Substanz enthaltenden flexiblen, versiegelbaren Beutels befestigbar sind, und eine Teigzubereitungsstation enthält, die Schlitzöffnungen (86) bildende obere und untere Schlitze aufweist; eine Kneteinrichtung zur mechanischen Bearbeitung der in dem Beutel enthaltenen Zutaten, wobei diese Kneteinrichtung die Halteeinrichtung (11) und die Schlitzöffnungen (86) und Mittel umfaßt, um eine hin- und hergehende Relativbewegung zwischen dem Beutel und den Schlitzöffnungen zu bewirken, so daß die Zutaten zu einer teigähnlichen Substanz geknetet werden; und eine Wärmebehandlungsstation (14) in dem Gehäuse, wodurch die geknetete teigähnliche Substanz behandelt wird, wobei die Schlitzöffnungen (86) jeweils von zwei Führungsmitteln, wie z.B. Gleitflächen (87) oder Rollen (88) begrenzt sind, dadurch gekennzeichnet, daß mindestens ein Gleitmittel zumindest des oberen Schlitzes relativ zu dem anderen Gleitmittel dieses Paares bewegbar ist, so daß Gas zu der gewünschten Zeit aus dem Beutel entweichen kann.

2. Vorrichtung nach Anspruch 1, dadurch gekennzeichnet, daß eines der besagten Führungsmittel (87, 88) durch eine Feder (110) an dem anderen ortsfesten Führungsmittel in Anlage gehalten wird, und daß eine Betätigungseinrichtung (109, 114) vorgesehen ist, um das bewegliche federbelastete Gleitmittel (87, 88) von dem anderen Gleitmittel weg zu bewegen, wenn sich der Beutel (12) in Richtung auf das Innere der Teigzubereitungsstation (13) dazwischen hindurchbewegt.

3. Vorrichtung nach Anspruch 1 oder 2, bei der die Haltemittel Zylinder (84; 85) sind, die jeweils mit Befestigungsmitteln (17) zur Befestigung des Beutels (12) versehen sind, wobei der obere und der untere Zylinder (84, 85) gemeinsam verdrehbar sind und wobei die Drehrichtung abwechselnd geändert wird, so daß der Beutel durch diese beiden Führungsmittel (88) nach oben und nach unten hin- und herbewegt wird, dadurch gekennzeichnet, daß die Betätigungseinrichtung (109, 114) dem betreffenden Zylinder (84) derart zugeordnet ist, daß die Betätigungseinrichtung (109, 114) in oder nahe einer Umkehrposition des Zylinders (84) ausgebildet ist, um das bewegliche Führungsteil (88a) von dem ortsfesten Führungsteil (88b) weg zu bewegen und in oder nahe der anderen Umkehrposition des Zylinders (84) ausgebildet ist, um das bewegliche Führungsteil (88a) freizugeben.

4. Vorrichtung nach Anspruch 3, dadurch gekennzeichnet, daß die Betätigungseinrichtung ein Betätigungsteil (114) umfaßt, das auf der Nabe des Zylinders (84) angeordnet und durch einen an dem Zylinder (84) befestigten Antriebsstift (115) oder dergleichen während des letzten Teils der Drehbewegung des Zylinders (84) vor seiner Richtungsumkehr zwischen zwei Endlagen verdrehbar ist, wobei das Betätigungsteil (114) an einem federbelasteten Hebelarm (109) anliegt, der an dem beweglichen Führungsteil (88a) anliegt, so daß in einer Endlage des Betätigungsteils (114) der Hebelarm (109) das besagte Führungsteil (88b) von dem ortsfesten Führungsteil wegdrückt und daß der Hebelarm (109) in der anderen Endlage des Betätigungsteils (114) das bewegliche Führungsteil (88a) freigibt.

5. Vorrichtung nach Anspruch 2, dadurch gekennzeichnet, daß die Betätigungseinrichtung einen Elektromagnet umfaßt.

6. Vorrichtung nach einem der vorhergehenden Ansprüche, dadurch gekennzeichnet, daß Sensormittel (102) in einer Wand der Wärmebehandlungsstation (14) angeordnet sind, welche Sensormittel das Aufgehen der besagten gekneteten teigartigen Substanz ermitteln.

7. Vorrichtung nach Anspruch 6, dadurch gekennzeichnet, daß mehrere Sensormittel (102) vertikal angeordnet sind, so daß sie die Höhe der gekneteten teigartigen Substanz ermitteln.

8. Vorrichtung nach einem der vorhergehenden Ansprüche, dadurch gekennzeichnet, daß Temperaturfühler (103) in einer Wand der Wärmebehandlungsstation (14) angeordnet sind, um die Temperatur der gekneteten teigartigen Substanz während ihrer Behandlung zu ermitteln.

9. Vorrichtung nach einem der vorhergehenden Ansprüche, dadurch gekennzeichnet, daß ein Dampfgenerator (104) vorgesehen ist, um während der Wärmebehandlung der gekneteten teigartigen Substanz Dampf in die Wärmebehandlungsstation (13) einzuführen.

10. Vorrichtung nach Anspruch 9, dadurch gekennzeichnet, daß der Dampfgenerator (104) ein Heizelement (105) und eine darüber angeordnete Einrichtung umfaßt, um Wasser über das Heizelement zu verteilen, wobei die Verteilungseinrichtung (106) mit einem außerhalb der Wärmebehandlungsstation angeordneten Wasserbehälter in Verbindung steht.

11. Vorrichtung nach einem der vorhergehenden Ansprüche, dadurch gekennzeichnet, daß ein Strichcode-Abtaster (120) außerhalb des besagten Schlitzes (86) nahe der Halteeinrichtung (11) angeordnet ist, um einen auf dem Beutel (12) angebrachten Strichcode (121) zu lesen, wobei der Strichcode-Abtaster mit einer Programmeinrichtung für den Betrieb der Vorrichtung verbunden ist.

## Revendications

1. Dispositif pour la fabrication automatique de produits alimentaires sous forme unitaire à partir de substances pâteuses, comprenant un caisson qui contient des moyens de maintien (11), prévus pour être fixés aux deux extrémités d'un sac fermable flexible (12) contenant les ingrédients pour la substance pâteuse, et une station de préparation de pâte (13) comportant une fente supérieure et une fente inférieure qui constituent des ouvertures à fente (86); des moyens de pétrissage pour travailler mécaniquement les ingrédients contenus dans ledit sac, lesdits moyens de pétrissage comprenant les moyens de maintien (11) et les ouvertures à fente (86), et des moyens pour engendrer un mouvement oscillant relatif entre le sac et les ouvertures à fente de sorte que les ingrédients sont pétris en une substance pâteuse; et une station de traitement à chaud (14) située dans ledit caisson, afin de traiter la substance pâteuse pétrie, lesdites ouvertures à fente (86) étant définies chacune par deux organes de guidage tels que des surfaces coulissantes (87) ou des rouleaux (88), caractérisé en ce que au moins un des organes de guidage (87, 88) d'au moins la fente supérieure est mobile par rapport à l'autre organe de guidage de cette paire, afin de permettre au gaz de s'échapper du sac au moment voulu.

2. Dispositif suivant la revendication 1, caractérisé en ce que l'un desdits organes de guidage (87, 88) est appliqué par un ressort (110) contre l'autre organe de guidage fixe, et en ce que des moyens de manoeuvre (109, 114) sont prévus pour agir sur l'organe de guidage mobile rappelé par ressort (87, 88) de manière à éloigner cet organe de guidage de l'autre organe de guidage lorsque le sac (12) passe entre ces organes vers l'intérieur de la station de préparation de pâte (13).

3. Dispositif suivant la revendication 1 ou 2, dans lequel lesdits moyens de maintien sont des cylindres (84, 85) comportant chacun des moyens d'attache (17) pour la fixation dudit sac (12) à ces cylindres, lesdits cylindres supérieur et inférieur (84, 85) pouvant tourner en synchronisme et la rotation étant inversée de façon alternée de sorte que ledit sac (12) oscille vers le haut et le bas à travers ladite paire d'organes de guidage (88), caractérisé en ce que lesdits moyens de manoeuvre (109, 114) sont associés au cylindre respectif (84) d'une manière telle que, dans ou près d'une position d'inversion du cylindre (84), les moyens de manoeuvre (109, 114) agissent pour éloigner l'organe de guidage mobile (88a) de l'organe de guidage fixe (88b) et, dans ou près de l'autre position d'inversion du cylindre (84), ils agissent pour libérer l'organe de guidage mobile (88a).

4. Dispositif suivant la revendication 3, caractérisé en ce que lesdits moyens de manoeuvre comprennent un actionneur (114) placé sur le moyeu du cylindre (84) et qui est agencé de manière à tourner entre deux positions extrêmes, par l'intermédiaire d'une tige d'entraînement (115) ou d'un élément analogue fixé au cylindre (84), pendant la dernière partie de la rotation du cylindre (84) avant que celle-ci soit inversée, ledit actionneur (114) appuyant sur un bras de levier à rappel par ressort (109) qui s'appuie contre l'organe de guidage mobile (88a) de sorte que, dans une position extrême de l'actionneur (114), le bras de levier (109) presse ledit organe de guidage (88a) pour l'éloigner de l'organe de guidage fixe et, dans l'autre position d'extrémité de l'actionneur (114), le bras de levier (109) libère ledit organe de guidage mobile (88a).

5. Dispositif suivant la revendication 2, caractérisé en ce que lesdits moyens de manoeuvre comprennent un électro-aimant.

6. Dispositif suivant l'une quelconque des revendications précédentes, caractérisé en ce que un capteur (102) est placé dans une paroi de ladite station de traitement à chaud (14), ce capteur détectant le niveau de montée de ladite substance pâteuse pétrie.

7. Dispositif suivant la revendication 6, caractérisé en ce que une pluralité de dits capteurs (102) sont placés verticalement de manière à détecteur la hauteur de ladite substance pâteuse pétrie.

8. Dispositif suivant l'une quelconque des revendications précédentes, caractérisé en ce que des moyens de détection de température (103) sont placés dans une paroi de ladite station de traitement à chaud (14) pour détecter la température de ladite substance pâteuse pétrie, pendant son traitement.

9. Dispositif suivant l'une quelconque des revendications précédentes, caractérisé en ce que un générateur de vapeur (104) est prévu pour l'introduction de vapeur d'eau dans la station de traitement à chaud (13) pendant le traitement de ladite substance pâteuse pétrie.

10. Dispositif suivant la revendication 9, caractérisé en ce que ledit générateur de vapeur (104) comprend un élément chauffant (105) et des moyens (106) placés au-dessus de celui-ci pour distribuer de l'eau sur ledit élément chauffant, lesdits moyens de distribution (106) communiquant avec un réservoir d'eau placé à l'extérieur de ladite station de traitement à chaud (14).

11. Dispositif suivant l'une quelconque des revendications précédentes, caractérisé en ce que un analyseur de code à barres (120) est prévu à l'extérieur de ladite fente (86) près des moyens de maintien (11) pour lire un code à barres (121) prévu sur le sac (12), ledit analyseur de code à barres (120) étant connecté à des moyens de programme pour le fonctionnement du dispositif.

# FIG 1

II ⇐

84
17
11

89
86

13, 14

88a
100

105

97

103

12

23

81

102

28

22

100 88a

88b

86

11

85

II ⇐

# FIG 2

# FIG 3

84
104
89
101

# FIG 4

# FIG 5

# FIG 6

# FIG 7